# EUROPÄISCHE PATENTSCHRIFT

(11) **EP 1 023 548 B1**
(45) Veröffentlichungstag und Bekanntmachung des Hinweises auf die Patenterteilung: **24.09.2003**
(21) Anmeldenummer: 98955447.2
(22) Anmeldetag: 14.10.1998
(51) Int. Cl.: F16J 15/06, F02B 27/02

(54) **DICHTUNGSELEMENT**
SEALING ELEMENT
ELEMENT D'ETANCHEITE

(30) Priorität: 14.10.1997 DE 19745348
(43) Veröffentlichungstag der Anmeldung: 02.08.2000
(73) Patentinhaber: FILTERWERK MANN + HUMMEL GmbH, 71631 Ludwigsburg (DE)
(72) Erfinder: JESSBERGER, Thomas, D-71277 Rutesheim (DE)
(74) Vertreter: Voth, Gerhard, Dipl.-Ing.
(86) Internationale Anmeldenummer: EP9806503
(87) Internationale Veröffentlichungsnummer: WO99019647

(56) Entgegenhaltungen:
- EP-A- 0 482 899
- EP-A- 0 583 931
- DE-U- 9 313 558

## Beschreibung

Die Erfindung betrifft ein Dichtungselement.

Es ist bekannt, für die Abdichtung zwischen zwei Bauteilen Dichtungsringe oder ähnliches vorzusehen. Sollten die Dichtungsringe unverlierbar an einem der Bauteile befestigt werden, so wird üblicherweise eine eingeknüpfte Dichtung verwendet, die manuell oder maschinell in entsprechende Öffnungen eines Bauteils eingeknüpft oder eingerastet wird. Dieses Befestigen einer Dichtung ist sehr zeitaufwendig, insbesondere wenn eine Vielzahl solcher Dichtungssysteme an einem Bauteil erforderlich sind, ist ein solches Montageverfahren nicht mehr wirtschaftlich.

Aus der DE-U-93 13 558.0 ist eine Abdichtung zwischen einem Gehäuse oder Flansch einer Betätigungsvorrichtung bekannt. Diese Abdichtung ist als Flachdichtung ausgeführt, die einstückig mit einseitig angeordneten Haltemitteln versehen ist.

Der Erfindung liegt daher die Aufgabe zugrunde, ein Dichtungselement zu schaffen, welches einfach aufgebaut ist, eine zuverlässige Abdichtung zwischen zweier Bauteile bewirkt und nur eine kurze Montagezeit erfordert. Diese Aufgabe wird durch die Merkmale des Anspruchs 1 gelöst.

Der wesentliche Vorteil der Erfindung liegt darin, daß mit einem Trägerelement und einem Elastomerelement ein eigenständiges Dichtungssystem geschaffen wird, wobei das Handling dieses Systems wesentlich erleichtert wird und dasselbe lediglich auf ein Bauteil oder eine abzudichtende Fläche aufgesteckt werden muß. Das Dichtungselement kann dabei eine beliebige Form aufweisen und sich optimal an die Kontur der abzudichtenden Flächen bzw. Teile anpassen.

Bevorzugt ist das Trägerelement ein Kunststoffspritzgießteil, es kann allerdings auch ein Metallblechteil oder ein aus einem geeigneten Werkstoff gestaltetes Teil sein. Das Elastomerelement wird bevorzugt auf dem Trägerelement aufvulkanisiert, diese Befestigungsart hält auch bei einer kraftschlüssigen Verbindung hohen Belastungen stand.

Angewendet wird ein Dichtelement in einer bevorzugten Ausgestaltung der Erfindung bei dem Ansaugsystem einer Brennkraftmaschine, dort sind insbesondere bei einem Schaltsaugrohr mehrere bewegliche Elemente angeordnet, die entsprechende Abdichtsysteme erfordern.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend Anhand von Ausführungsbeispielen näher erläutert.

Es zeigt
- Figur 1: ein Dichtungselement in einer Schnittdarstellung
- Figur 2: das in Figur 1 gezeigte Dichtungselement in einer Draufsicht
- Figur 3: ein Ansaugsystem mit Dichtungselementen in einer Schnittdarstellung
- Figur 4: das in Figur 3 dargestellte System mit geöffneter Klappe

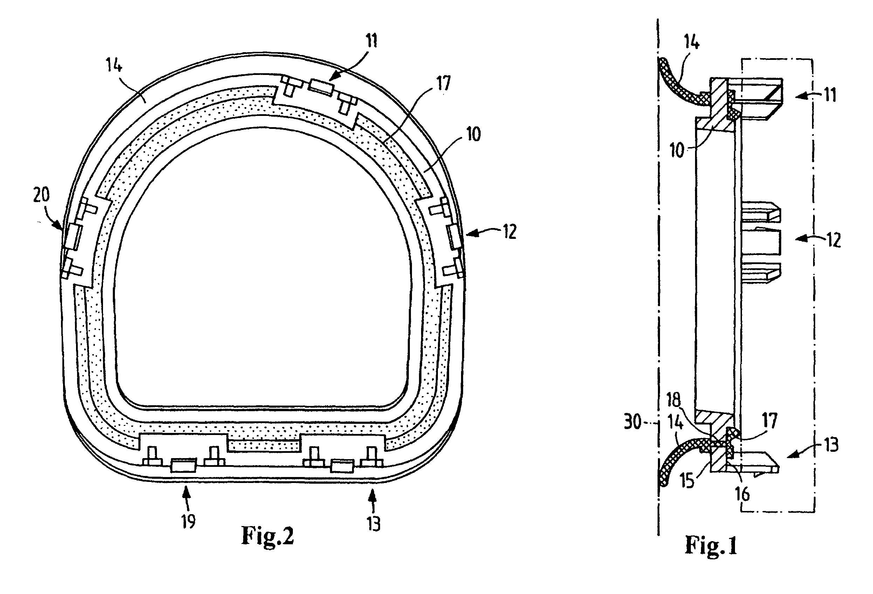

Das Dichtungselement gemäß Figur 1 besteht aus einem Trägerelement 10, dieses ist ein im wesentlichen offener Ringkörper, der am Umfang verteilt Rastelemente 11, 12, 13 aufweist. Diese Rastelemente sind für die Befestigung des Trägerelements 10 an einer hier nicht dargestellten flächigen Struktur erforderlich. An dem Trägerlement 10 ist linksseitig eine tulpenförmige Dichtung als Elastomerelement 14 an einer Anlagenfläche 15 aufvulkanisiert oder angespritzt. Rechtsseitig ist an einer Anlagefläche 16 des Trägerelements 10 ebenfalls ein Elastomerelement 17 aufvulkanisiert oder angespritzt. Die beiden Elastomer-Teile können getrennt hergestellt werden, es besteht auch die Möglichkeit, sofern Verbindungsöffnungen 18 entlang des Dichtungsverlaufs an dem Trägerelement 10 vorgesehen sind, beim Aufvulkanisieren oder Spritzen eines Elastomerelements durch entsprechend hohen Druck das Elastomer durch die Verbindungsöffnungen hindurchfließen zu lassen und so in einem Arbeitsgang ein beidseitig sich erstreckendes Elastomerelement 14, 17 zu bilden.

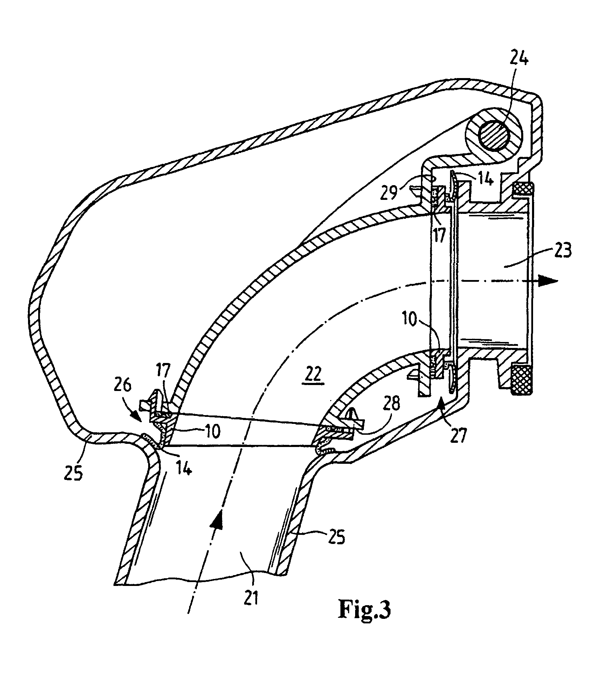

Figur 2 zeigt in einer Draufsicht das Trägerelement 10 mit den Rastelementen 11, 12, 13, 19, 20. Auf der dem Betrachter zugewandten Seite ist das Elastomerelement 17 erkennbar. Auf der gegenüberliegenden Seite ist im äußeren Bereich das Elastomerelement 14 sichtbar.

Figur 3 zeigt ein Ansaugsystem für eine Brennkraftmaschine in einer schematischen Schnittdarstellung. Ansaugluft gelangt über die Eintrittsöffnung 21 in den Schwenkkanal 22 und von dort zu der Austrittsöffnung 23, die normalerweise am Lufteintritt einer Brennkraftmaschine angeflanscht ist. Der Schwenkkanal 22 ist drehbar an einer Achse 24 gelagert und trägt an seinen der Grundstruktur 25 des Ansaugsystems zugewandten Enden jeweils ein Dichtungselement 26, 27. Wie es in Figur 1 und Figur 2 dargestellt ist. Das Dichtungselement ist jeweils mit seinen Rastelementen an Flanschflächen 28, 29 des Schwenkkanals 22 befestigt. Dabei dient jeweils das Elastomerelement 17 zur Abdichtung zwischen Schwenkkanal 22 und Trägerelement 10 und das Elastomerelement 14 zur Abdichtung zwischen Schwenkkanal und Grundstruktur 25.

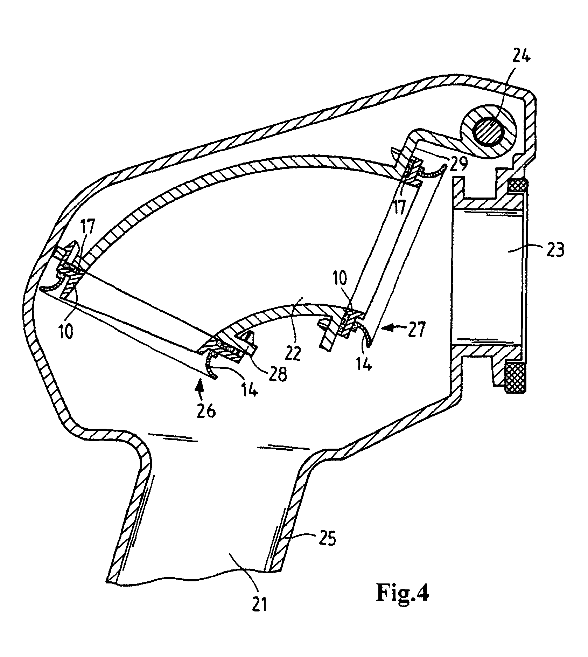

Figur 4 zeigt das in Figur 3 dargestellt Ansaugsystem mit geöffnetem Schwenkkanal 22 Gleiche Teile sind mit gleichen Bezugszeichen versehen.

Ein Vergleich zwischen Figur 3 und Figur 4 zeigt, daß die Dichtungselemente 26, 27 beim Schließen des Schwenkkanals 22 sich optimal an die Grundstruktur 25 anpassen.

## Patentansprüche

1. Dichtungselement zur Abdichtung zweier planparallel verlaufenden Flächen, bestehend aus einem Trägerelement (10), welches ein Kunststoffspritzgießteil ist, wobei dieses Trägerelement (10) Rast- oder Schnappelemente (11, 12, 13) aufweist und mit einer der Flächen über die Rast- oder Schnappelemente (11, 12, 13) verbindbar ist und wobei das Trägerelement ein im wesentlichen offener Ringkörper ist, **dadurch gekennzeichnet, daß** beidseitig des Trägerelements ein die Abdichtung zwischen Trägerelement (10) und Fläche (30) bewirkendes Elastomerelement (14, 17) angeordnet ist, wobei das Elastomerelement (14, 17) auf dem Trägerelement (10) aufvulkanisiert oder aufgespritzt ist und das Trägerelement (10) Verbindungsöffnungen (18) entlang des Dichtungsverlaufs aufweist, wobei beim Aufvulkanisieren oder Spritzen des Elastomerelements (14, 17) durch entsprechend hohen Druck das Elastomer durch die Verbindungsöffnungen (18) hindurchfließt.

2. Dichtungselement nach Anspruch 1, **dadurch gekennzeichnet, daß** das Trägerelement (10) ein Kunststoffspritzgießteil oder ein Metallblechteil ist.

3. Ansaugsystem für eine Brennkraftmaschine mit einem Dichtungselement nach einem der vorherigen Ansprüche, **dadurch gekennzeichnet, daß** das Ansaugsystem (25) wenigstens ein umschaltbares Saugrohrstück (22) aufweist und an einer Verbindungstelle des Saugrohrstücks (22) mit dem Ansaugsystem wenigstens ein Dichtungselement (26, 27) angeordnet ist.

## Claims

1. Sealing element for sealing two surfaces which extend in a plane-parallel manner, said element comprising a supporting member (10) which is a plastics material injection-moulded component part, said supporting member (10) having detent or snap-in elements (11, 12, 13) and being connectable to one of the surfaces via the detent or snap-in elements (11, 12, 13), and the supporting member being a substantially open annular body, **characterised in that** an elastomeric member (14, 17), which effects the sealing between the supporting member (10) and the surface (30), is disposed on each side of the supporting member, the elastomeric member (14, 17) being vulcanised or sprayed onto the supporting member (10), and the supporting member (10) having connecting openings (18) along the extent of the seal, the elastomer flowing through the connecting openings (18) as a result of an appropriately high pressure during the vulcanising or spraying of the elastomeric member (14, 17).

2. Sealing element according to claim 1, **characterised in that** the supporting member (10) is a plastics material injection-moulded component part or a sheet-metal component part.

3. Intake system for an internal combustion engine, having a sealing element according to one of the previous claims, **characterised in that** the intake system (25) includes at least one switchable induction manifold part (22), and at least one sealing element (26, 27) is disposed at a junction between the induction manifold part (22) and the intake system.

## Revendications

1. Elément d'étanchéité pour assurer l'étanchéité entre deux surfaces planes parallèles, se composant d'un élément de support (10), qui est une pièce de plastique moulée par injection, dans lequel l'élément de support (10) présente des éléments d'accrochage ou d'enclipsage (11, 12, 13) et peut être assemblé à une des surfaces par les éléments d'accrochage ou d'enclipsage (11, 12, 13), et dans lequel l'élément de support est un corps annulaire essentiellement ouvert,
**caractérisé en ce qu'**
un élément élastomère (14, 17), assurant l'étanchéité entre l'élément de support (10) et la surface (30), est disposé de part et d'autre de l'élément de support, l'élément élastomère (14, 17) étant vulcanisé ou pulvérisé sur l'élément de support (10) et l'élément de support (10) présentant des ouvertures de jonction (18) le long du joint, et l'élastomère s'écoulant à travers les ouvertures de jonction (18) lors de la vulcanisation ou de la pulvérisation de l'élément élastomère (14, 17) par une haute pression appropriée.

2. Élément d'étanchéité selon la revendication 1,
**caractérisé en ce que**
l'élément de support (10) est une pièce de plastique moulée par injection ou une pièce de tôle métallique.

3. Système d'aspiration pour un moteur à combustion interne avec un élément d'étanchéité selon l'une quelconque des revendications précédentes,
**caractérisé en ce que**
le système d'aspiration (25) présente au moins une pièce tubulaire d'aspiration pivotante (22) et au moins un élément d'étanchéité (26, 27) et est disposé sur au moins un emplacement d'assemblage de la pièce tubulaire d'aspiration (22) avec le système d'aspiration.
